# EUROPÄISCHE PATENTANMELDUNG

(11) **EP 2 091 140 A2**
(43) Veröffentlichungstag der Anmeldung: **19.08.2009**
(21) Anmeldenummer: 09001358.2
(22) Anmeldetag: 31.01.2009
(51) Int. Cl.: H02M 5/257

(54) **Mehrphasige elektrische Schaltung zum Abschalten eines über jeweils einen Drehstromsteller geführten Stroms**

(30) Priorität: 15.02.2008 DE 102008009278
(71) Anmelder: Converteam Technology Ltd, Rugby Warwickshire CV21 1BU (GB)
(72) Erfinder: Eggert, Bernhard, Dr., 13591 Berlin (DE)
(74) Vertreter: Dreiss

(57) **Zusammenfassung**

Es wird eine mehrphasige elektrische Schaltung zum Abschalten eines über jeweils einen Drehstromsteller geführten Stroms beschrieben. Die Sternpunkte der an die Phasen angeschlossenen Spannungssysteme sind nicht über einen Nullleiter miteinander verbunden sind. Der Drehstromsteller jeder Phase weist zwei Thyristoren (T11, T21, T12, T22, T13, T23) auf. Zu allen Phasen ist eine einzige Serienschaltung bestehend aus einem Kondensator (C) und einem der Phasenzahl entsprechenden Anzahl von parallelgeschalteten Löschschaltern (TL1, TL2, TL3) parallel geschaltet. Der Kondensator (C) ist über eine Diodenbrücke (DB) und einen Transformator (Tr) aufladbar.

## Beschreibung

Die Erfindung betrifft eine mehrphasige elektrische Schaltung zum Abschalten eines über jeweils einen Drehstromsteller geführten Stroms, wobei die Sternpunkte der an die Phasen angeschlossenen Spannungssysteme nicht über einen Nullleiter miteinander verbunden sind, und wobei der Drehstromsteller jeder Phase zwei Thyristoren aufweist. Die Erfindung betrifft ebenfalls ein Verfahren zum Abschalten eines über einen Thyristor eines Drehstromstellers geführten Stroms.

Beispielsweise zur Kopplung zweier elektrischer Netze oder zur Kopplung eines Netzes und einer motorischen oder generatorischen Last ist es bekannt, die Ströme über die Thyristoren von Drehstromstellern zu führen. Tritt in einer derartigen elektrischen Schaltung ein Fehlerfall auf, so können die Ströme über die Thyristoren auf ein Vielfaches ihres Nennstroms ansteigen. Zur Vermeidung von Schäden ist es bekannt, die Thyristoren zwangsweise innerhalb einer halben Netzperiode abzuschalten. Weiterhin werden die Thyristoren häufig noch überdimensioniert.

Aufgabe der Erfindung ist es, eine Schaltung sowie ein Verfahren der eingangs genannten Art zu schaffen, mit denen eine schnelle Abschaltung der Thyristoren mit geringem Aufwand möglich ist.

Die Erfindung löst diese Aufgabe durch die Schaltung nach einem der Ansprüche 1 oder 5 und durch das Verfahren nach einem der Ansprüche 10 oder 11.

Bei der erfindungsgemäßen elektrische Schaltung sind die Sternpunkte der an die Phasen angeschlossenen Spannungssysteme nicht über einen Nullleiter miteinander verbunden und der Drehstromsteller jeder Phase weist zwei Thyristoren auf. Zu allen Phasen ist eine einzige Serienschaltung bestehend aus einem Kondensator und einem der Phasenzahl entsprechenden Anzahl von parallelgeschalteten Löschschaltern parallel geschaltet. Nach dem erfindungsgemäßen Verfahren wird einer der Löschschalter leitend geschaltet und von dem Kondensator wird ein Strom über den Löschschalter getrieben, der dem über den zugehörigen Thyristor geführten Strom entgegenwirkt. Der über den Thyristor geführte Strom wird auf diese Weise zu Null, so dass der Thyristor abgeschaltet wird.

Im Anfangszustand der vorstehend erläuterten Vorgehensweise muss der Kondensator auf eine negative Spannung aufgeladen sein. Hierzu ist erfindungsgemäß vorgesehen, dass der Kondensator über eine Diodenbrücke und einen Transformator aufladbar ist. Vorzugsweise ist der Kondensator über die Diodenbrücke und den Transformator mit zwei Phasen eines der beiden Netze gekoppelt. Über diese Anordnung kann der Kondensator auf die erwünschte negative Spannung des Anfangszustands aufgeladen werden.

Ebenfalls ist es möglich, dass zum Aufladen des Kondensators der Löschschalter und ein gleichsinnig geschalteter Thyristor des Drehstromstellers gleichzeitig leitend geschaltet werden. In diesem Fall muss danach die Polarität des Kondensators noch umgekehrt werden.

Besonders vorteilhaft ist es, wenn die erfindungsgemäße Schaltung zur Kopplung eines elektrischen Energieversorgungsnetzes und eines Generators insbesondere einer Windkraft-Energieerzeugungsanlage zur Anwendung kommt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

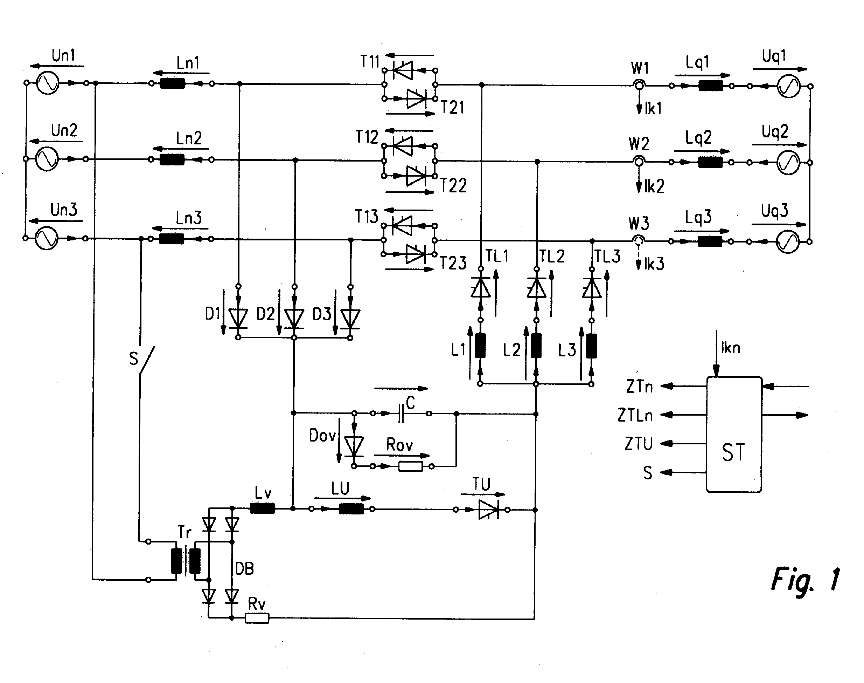

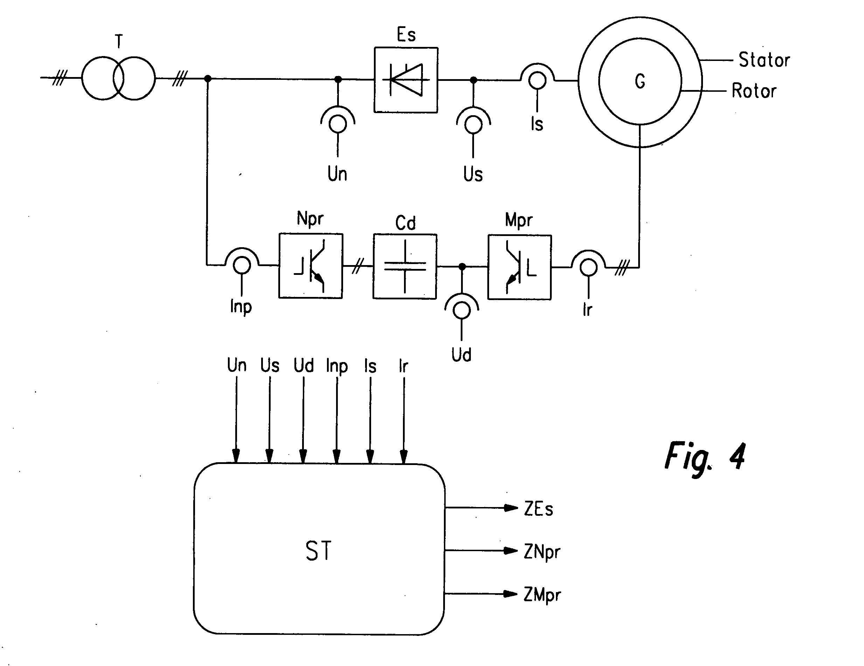

Die Figuren 1 bis 3 zeigen jeweils einen schematischen Schaltplan eines Ausführungsbeispiels einer erfindungsgemäßen elektrischen Schaltung und Figur 4 zeigt einen schematischen Schaltplan eines Ausführungsbeispiels einer erfindungsgemäßen elektrischen Schaltung mit einem doppelt gespeisten Asynchrongenerator mit netzgekoppeltem Stator.

In der Figur 1 ist eine dreiphasige Schaltung dargestellt, bei der die Phasen zweier elektrischer Netze über jeweils einen Drehstromsteller miteinander gekoppelt sind. Die Sternpunkte der an die Phasen angeschlossenen, ein- und ausgangsseitigen Spannungssysteme sind dabei nicht über einen gemeinsamen Nullleiter miteinander verbunden.

Die beiden Netze werden durch die Netzspannungen Un1, Un2, Un3 und Uq1, Uq2, Uq3 repräsentiert, wobei beiden Netzen eine Netzinduktivität Ln1, Ln2, Ln3 und Lq1, Lq2, Lq3 in jeder ihrer Phasen zugeordnet ist. Eines der beiden Netze kann auch eine passive motorische oder generatorische Last sein. Der Drehstromsteller wird jeweils durch die beiden zueinander parallel und gegensinnig geschalteten Thyristoren T11, T12, T13 und T21, T22, T23 repräsentiert. Diese Thyristoren werden nachfolgend als Schalter betrachtet, die in Durchlassrichtung durch einen Zündimpuls leitend geschaltet werden können und dann stromführend sind, und die nach einer Umkehrung der Stromrichtung des geführten Stroms sperren und damit den Strom abschalten.

Die Netzspannung Un1, die zugehörige Netzinduktivität Ln1, die beiden parallel geschalteten Thyristoren T11, T21, die zu dem zweiten Netz zugehörige Netzinduktivität Lq1 und die Netzspannung Uq1 bilden eine Serienschaltung. Entsprechendes gilt für die anderen beiden Phasen der beiden Netze. Die Phasen der beiden Netze sind jeweils in einem Sternpunkt miteinander verbunden, die beiden Sternpunkte sind jedoch nicht miteinander verbunden. Es ist also kein Nullleiter vorhanden.

Allen Thyristoren ist eine Löscheinrichtung zugeordnet, die aus einer Serienschaltung eines Kondensators C und einer Parallelschaltung besteht, die jeweils eine Spule L1, L2, L3 und jeweils einen Löschschalter TL1, TL2, TL3 aufweist. Diese Löscheinrichtung ist über Dioden D1, D2, D3 den Thyristoren T11, T21 bzw. T12, T22 bzw. T13, T23 parallel geschaltet ist. Weiterhin weist die Löscheinrichtung eine Serienschaltung eines Umschwingthyristors TU und einer Umschwingspule LU auf, die dem Kondensator C parallel geschaltet ist. Bei den Löschschaltern TL1, TL2, TL3 kann es sich um Thyristoren handeln.

Eine Steuerung ST ist vorhanden, die Ausgangssignale ZTn, ZTLn, ZTU zur Ansteuerung der Thyristoren, der Löschschalter und des Umschwingthyristors erzeugt. In jeder Phase wird von einem Stromsensor W1, W2, W3 ein zwischen den beiden Netzen fließender Laststrom gemessen und ein entsprechendes Signal an die Steuerung ST weitergegeben. Weiterhin ist die Steuerung ST über bidirektionale Leitungen mit anderen Steuer- oder Regelsystemen gekoppelt.

Es wird nachfolgend beispielhaft nur eine der drei Phasen der Schaltung der Figur 1 betrachtet, nämlich die Phase mit den Thyristoren T11, T21. Für die anderen beiden Phasen gilt sinngemäß das Entsprechende. Weiterhin wird davon ausgegangen, dass der Thyristor T21 der betrachteten Phase leitet und damit einen Laststrom führt. Weiterhin wird davon ausgegangen, dass der Kondensator C negativ aufgeladen ist, also dass an dem Kondensator C eine Spannung anliegt, die dem in der Figur 1 angegebenen Spannungspfeil entgegen gerichtet ist.

In diesem Betriebszustand tritt eine Störung auf, die zu einem Überlaststrom führt, der ein Mehrfaches des Laststroms betragen kann. Dieser über den Thyristor T21 fließende Überlaststrom wird von dem Stromsensor W1 gemessen. Überschreitet der Überlaststrom einen vorgegebenen Schwellwert, so führt dies zu dem nachfolgend beschriebenen Löschen des Thyristors T21 durch die Löscheinrichtung.

Sobald der gemessene Überlaststrom den Schwellwert erreicht, werden von der Steuerung ST keine weiteren Zündimpulse mehr an die Thyristoren T11, T21 ausgegeben. Gleichzeitig wird der Löschschalter TL1 von der Steuerung ST leitend geschaltet. Damit bildet der Kondensator C zusammen mit der Spule L1 einen Schwingkreis. Über den Kondensator C, die Spule L1, den Löschschalter TL1 und den Thyristor T21 fließt ein größer werdender Schwingstrom. Dieser Schwingstrom wirkt dem von dem Thyristor T21 geführten Überlaststrom entgegen. Wenn dieser von dem Kondensator C getriebene Schwingstrom den Wert des Überlaststroms erreicht, wird der Thyristor T21 stromlos. Der von dem Thyristor T21 geführte Überlaststrom wird vollständig kompensiert und damit zu Null. In diesem Zeitpunkt wird der gesamte Überlaststrom nicht mehr über den Thyristor T21 geführt, sondern über den Kondensator C. Der Thyristor T21 ist damit abgeschaltet.

Bei dem bisher beschriebenen Vorgang wird der Kondensator C fortlaufend von dem über den Löschschalter TL1 fließenden Schwingstrom positiv aufgeladen. In der nunmehr vorliegenden Serienschaltung aus der Netzinduktivität Ln1, der Diode D1, dem Kondensator C, der Spule L1, dem Löschschalter TL1 und der Netzinduktivität Lq1 hat dies zur Folge, dass die Spannung an den beiden Netzinduktivitäten Ln1, Lq1 jeweils immer kleiner wird und irgendwann die Polarität wechselt. Dabei wird davon ausgegangen, dass die beiden Netzspannungen Un1 und Uq1 bei dem gesamten Vorgang im wesentlichen konstant bleiben. Dies ist gleichbedeutend damit, dass der über den Löschschalter TL1 fließende Überlaststrom ebenfalls immer kleiner wird. Irgendwann wird dann dieser Überlaststrom zu Null, so dass der Löschschalter TL1 abgeschaltet ist.

Es ist somit nunmehr ein Zustand erreicht, in dem der Thyristor T21 und auch der Löschschalter TL1 abgeschaltet ist, und in dem der Überlaststrom gleich Null ist. Im Unterschied zum Anfangszustand ist jedoch der Kondensator C nicht mehr negativ aufgeladen, sondern positiv.

Zur Wiederherstellung des Anfangszustands wird der Umschwingthyristor TU von der Steuerung ST leitend geschaltet. Der Kondensator C wird damit über die Umschwingspule LU entgegen dem Spannungspfeil der Figur 1 und damit negativ aufgeladen. Dieser Umladevorgang wird so lange fortgesetzt, bis der Kondensator C die negative Spannung des Anfangszustands wieder aufweist. Gegebenenfalls ist in der Serienschaltung des Umschwingthyristors TU und der Umschwingspule LU ein zusätzlicher Umschwingwiderstand (nicht dargestellt) zum Zwecke der Dämpfung enthalten.

Gegebenenfalls kann eine Serienschaltung aus einer Diode Dov und einem Widerstand Rov parallel zu dem Kondensator C geschaltet sein. Diese Serienschaltung wirkt als Spannungsbegrenzung für den Kondensator C. Anstelle der erläuterten Serienschaltung kann auch ein Varistor zu dem Kondensator C parallel geschaltet sein.

Sofern der Thyristor T11 leitet und damit einen Laststrom führt, erfolgt das Abschalten des Thyristors T11 auf die erläuterte Art und Weise mit Hilfe der Löscheinrichtung. Es wird an dieser Stelle noch darauf hingewiesen, dass die Thyristoren T11, T12, T13 auch durch Dioden ersetzt werden können. Weiterhin wird darauf hingewiesen, dass - aufgrund des fehlenden Nullleiters - die Summe aller Phasenströme gleich Null sein muss. Damit fließen die Ströme in zwei Phasen immer in die eine Richtung und der Strom in der dritten Phase in die Gegenrichtung. Eine Abschaltung aller Phasen kann somit dadurch erreicht werden, dass beispielsweis die Thyristoren der beiden Phasen mit gleichgerichtetem Stromfluss abgeschaltet werden, selbst wenn der Thyristor der Phase mit dem gegengerichteten Strom leitend geschaltet ist.

Wie erläutert wurde, wird von einem Anfangszustand ausgegangen, in dem der Kondensator C negativ aufgeladen ist. Für diesen Anfangszustand gilt, dass der Wert der negativen Spannung so gewählt ist, dass der Scheitelwert des erläuterten Schwingstroms größer ist als der maximal mögliche Überlaststrom.

Zum erstmaligen Aufladen des Kondensators C ist in der Schaltung der Figur 1 ein Schalter S, ein Wechselstrom-Transformator Tr, eine Diodenbrücke DB sowie ein Vorschaltwiderstand Rv und eine Vorschaltspule Lv vorgesehen. Die Primärspule des Transformators Tr ist über den Schalter S mit zwei der drei Phasen des ersten Netzes Un1, Un2, Un3 verbunden. Die Sekundärspule des Transformators Tr ist mit den mittleren Anschlusspunkten der Diodenbrücke DB verbunden, während die äußeren Anschlusspunkte der Diodenbrücke DB parallel zu dem Kondensator C geschaltet sind. Zwischen diesen äußeren Anschlusspunkten der Diodenbrücke DB und dem Kondensator C kann der Vorschaltwiderstand Rv und gegebenenfalls die Vorschaltspule Lv geschaltet sein.

Der Transformator Tr dient der Potentialtrennung. Der Schalter S kann von der Steuerung ST ein- und ausgeschaltet werden. Mit Hilfe der Diodenbrücke DB wird die Sekundärspannung des Transformators Tr gleichgerichtet und die für das negative Aufladen des Kondensators C erforderliche Polarität der von dem Transformator Tr letztlich zur Verfügung gestellten Spannung erzeugt. Der beim Aufladen des Kondensators C auftretende Ladestrom kann durch den Vorschaltwiderstand Rv und gegebenenfalls auch von der Vorschaltspule Lv begrenzt werden. Der Vorschaltwiderstand Rv bewirkt weiterhin eine Entkopplung die beschriebene Ladeeinrichtung bei einem Löschvorgang hinsichtlich der sich verändernden Spannung am Kondensator C.

Zum erstmaligen Aufladen des Kondensators C wird der Schalter S von der Steuerung ST geschlossen. Dadurch wird von dem Transformator Tr ein Ladestrom erzeugt, der über eine Serienschaltung bestehend aus der Sekundärspule desselben, der Diodenbrücke DB, dem Vorschaltwiderstand Rv, dem Kondensator C und der Vorschaltspule Lv fließt. Durch diesen Ladestrom wird der Kondensator C negativ aufgeladen. Hat der Kondensator C die für den Anfangszustand erwünschte negative Spannung erreicht, so wird diese negative Spannung über den geschlossenen Schalter S und den Transformator Tr dauernd aufrechterhalten. In diesem Zustand fließt nur ein Erhaltungsstrom über die vorstehend genannte Serienschaltung, der kleiner ist als der Ladestrom.

Nach einem Löschvorgang wird - wie erläutert wurde - der Kondensator C mit Hilfe des Umschwingthyristors TU und der Umschwingspule LU wieder negativ aufgeladen. Hat der Kondensator C die erwünschte negative Spannung erreicht, so kann mit Hilfe der erläuterten Ladeeinrichtung diese negative Spannung wieder erhalten werden.

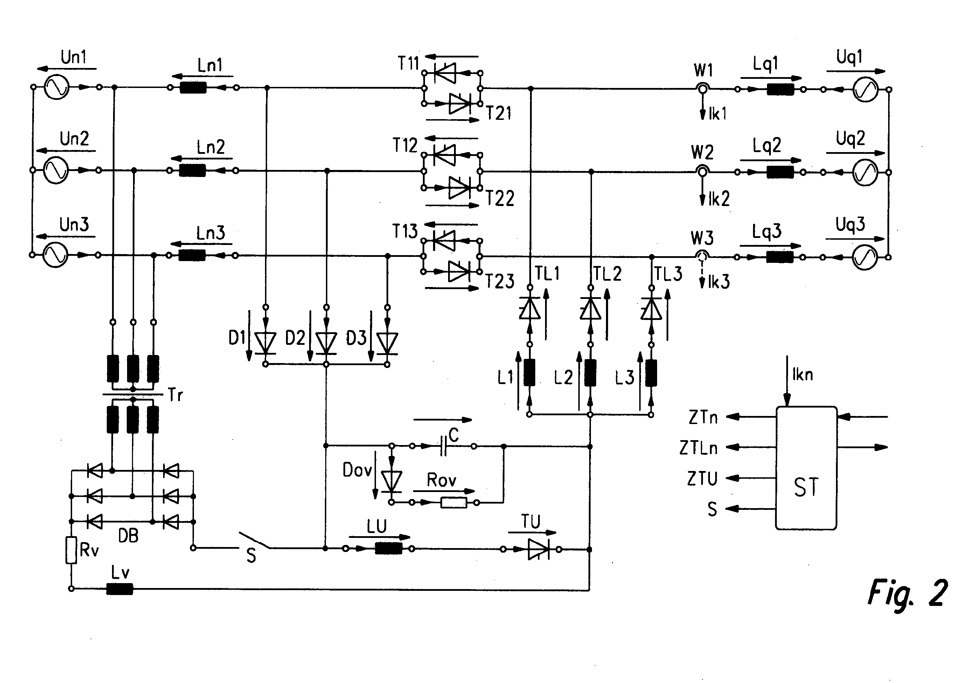

In der Figur 2 ist eine Schaltung dargestellt, die weitgehend mit der Schaltung der Figur 1 übereinstimmt. Es werden deshalb nachfolgend nur diejenigen Bauteile und Funktionsweisen der Schaltung der Figur 2 erläutert, die sich von der Schaltung der Figur 1 unterscheiden. Im Hinblick auf übereinstimmende Bauteile und Funktionsweisen der Schaltung der Figur 2 wird auf die Beschreibung der Schaltung der Figur 1 verwiesen.

Zum erstmaligen Aufladen des Kondensators C ist in der Schaltung der Figur 2 ein Drehstrom-Transformator Tr, ein Schalter S, eine Diodenbrücke DB sowie ein Vorschaltwiderstand Rv und eine Vorschaltspule Lv vorgesehen. Die Primärspulen des Transformators Tr sind mit den Phasen des ersten Netzes Un1, Un2, Un3 verbunden. Die Sekundärspulen des Transformators Tr sind mit den mittleren Anschlusspunkten der Diodenbrücke DB verbunden, während die äußeren Anschlusspunkte der Diodenbrücke DB über den Schalter S parallel zu dem Kondensator C geschaltet sind. Zwischen diesen äußeren Anschlusspunkten der Diodenbrücke DB und dem Kondensator C kann der Vorschaltwiderstand Rv und gegebenenfalls die Vorschaltspule Lv geschaltet sein.

Der Transformator Tr dient der Potentialtrennung. Der Schalter S kann von der Steuerung ST ein- und ausgeschaltet werden. Mit Hilfe der Diodenbrücke DB erfolgt eine Gleichrichtung und es wird die für das negative Aufladen des Kondensators C erforderliche Polarität der von dem Transformator Tr zur Verfügung gestellten Spannung erzeugt. Der beim Aufladen des Kondensators C auftretende Ladestrom kann durch den Vorschaltwiderstand Rv und gegebenenfalls auch von der Vorschaltspule Lv begrenzt werden. Der Vorschaltwiderstand Rv bewirkt weiterhin eine Entkopplung die beschriebene Ladeeinrichtung bei einem Löschvorgang hinsichtlich der sich verändernden Spannung am Kondensator C.

Zum erstmaligen Aufladen des Kondensators C wird der Schalter S von der Steuerung ST geschlossen. Dadurch wird von dem Transformator Tr ein Ladestrom erzeugt, der über eine Serienschaltung bestehend aus den Sekundärspulen desselben, der Diodenbrücke DB, dem Vorschaltwiderstand Rv, dem Kondensator C und der Vorschaltspule Lv fließt. Durch diesen Ladestrom wird der Kondensator C negativ aufgeladen. Hat der Kondensator C die für den Anfangszustand erwünschte negative Spannung erreicht, so wird diese negative Spannung über den geschlossenen Schalter S und den Transformator Tr dauernd aufrechterhalten. In diesem Zustand fließt nur ein Erhaltungsstrom über die vorstehend genannte Serienschaltung, der kleiner ist als der Ladestrom.

Nach einem Löschvorgang wird - wie erläutert wurde - der Kondensator C mit Hilfe des Umschwingthyristors TU und der Umschwingspule LU wieder negativ aufgeladen. Hat der Kondensator C die erwünschte negative Spannung erreicht, so kann mit Hilfe der erläuterten Ladeeinrichtung diese negative Spannung wieder erhalten werden.

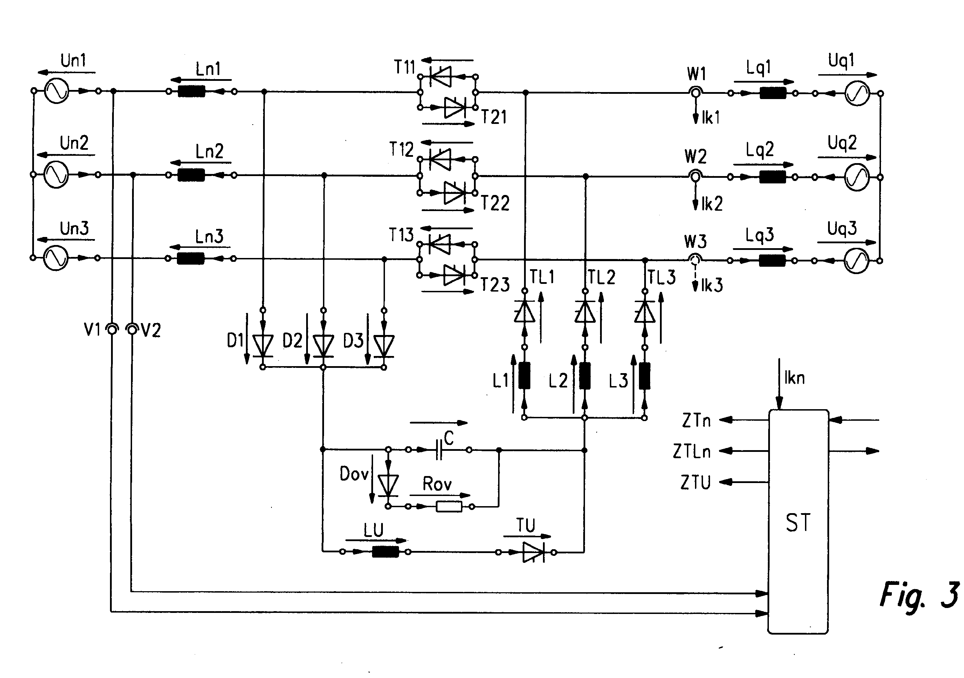

In der Figur 3 ist eine Schaltung dargestellt, die weitgehend mit der Schaltung der Figur 1 übereinstimmt. Es werden deshalb nachfolgend nur diejenigen Bauteile und Funktionsweisen der Schaltung der Figur 3 erläutert, die sich von der Schaltung der Figur 1 unterscheiden. Im Hinblick auf übereinstimmende Bauteile und Funktionsweisen der Schaltung der Figur 3 wird auf die Beschreibung der Schaltung der Figur 1 verwiesen.

Zum erstmaligen Aufladen des Kondensators C werden in der Schaltung der Figur 3 im wesentlichen diejenigen Bauteile verwendet, die für den Löschvorgang vorhanden sind und im Zusammenhang mit der Figur 1 erläutert wurden. Zusätzlich sind nur zwei Sensoren V1, V2 vorhanden, mit denen die Spannung an zwei Phasen des ersten Netzes Un1, Un2, Un3 gemessen werden kann.

Es wird nunmehr davon ausgegangen, dass die Netzspannung Un1 mit Hilfe des Sensors V1 als positive Spannung erkannt wird. Wenn unter diesen Bedingungen nur der Thyristor T11 und der gleichsinnig geschaltete Löschschalter TL1 gleichzeitig von der Steuerung ST leitend geschaltet werden, dann fließt ein Strom von der Netzspannung Un1 über die Parallelschaltung der Netzspannungen Un2, Un3, der zugehörigen Netzinduktivitäten Ln2, Ln3 und der nachgeschalteten Dioden D2, D3 zu dem Kondensator C und von dort über den Löschschalter TL1, den Thyristor T11 und die Netzinduktivität Ln1 wieder zurück zur Netzspannung Un1. Von diesem Strom wird der Kondensator C aufgeladen.

Es ist möglich, dass der Kondensator C mit Hilfe eines einzigen Ladevorgangs aufgeladen werden kann, wie dies vorstehend erläutert ist. Es ist aber ebenfalls möglich, dass mehrere derartige Ladevorgänge über mehrere Netzperioden zur Anwendung kommen, um den Kondensator C aufzuladen. Bei der zweiten Möglichkeit kann der beim Aufladen fließende Ladestrom kleiner gewählt werden als bei der ersten Möglichkeit.

Das beschriebene Aufladen des Kondensators C hat eine positive Spannung auf dem Kondensator C zur Folge. Nachdem der Kondensator C auf die gewünschte Spannung aufgeladen ist, wird der Umschwingthyristor TU von der Steuerung ST leitend geschaltet, um auf diese Weise die Polarität der Spannung auf dem Kondensator C umzukehren.

Nachdem die für den erläuterten Anfangszustand erforderliche negative Spannung auf dem Kondensator C vorhanden ist, kann eine Schaltung nach einer der Figuren 1 oder 2 dazu verwendet werden, diese negative Spannung aufrechtzuerhalten. Alternativ kann hierzu auch ein Akkumulator verwendet werden.

In der Figur 4 ist eine elektrische Schaltung eines doppelt gespeisten Asynchrongenerators mit netzgekoppeltem Stator dargestellt. Diese Schaltung kommt insbesondere in Energieerzeugungsanlagen zum Einsatz, beispielsweise in Windkraft- oder Wasserkraft- oder Gasturbinen-Energieerzeugungsanlagen.

Ein dreiphasiges Energieversorgungsnetz ist mit einem Transformator T verbunden, an den weiterhin ein Statorschalter Es angeschlossen ist, der seinerseits mit dem Stator eines Asynchrongenerators G verbunden ist. Der Statorschalter Es kann durch eine der elektrischen Schaltungen der Figuren 1 bis 3 realisiert sein. Der Statorschalter Es weist also zumindest einen der Thyristoren T11, T12, T12, T22, T13, T23 der Figuren 1 bis 3 auf.

Zur Messung der Netzspannung Un ist auf der Netzseite des Statorschalters Es ein Spannungssensor vorgesehen. Zur Messung der Statorspannung Us ist auf der Statorseite des Statorschalters Es ein weiterer Spannungssensor vorgesehen. Auf dieser Statorseite ist des weiteren ein Stromsensor vorhanden, der den über den Statorschalter Es fließenden Statorstrom Is misst.

An den Verbindungspunkt des Transformators T und des Statorschalters Es ist ein Netz-Umrichter Npr angeschlossen, der über einen Zwischenkreis Cd mit einem Motor-Umrichter Mpr verbunden ist. Der Motor-Umrichter Mpr ist weiterhin mit dem Rotor des Asynchrongenerators G verbunden. Der Netz-Umrichter Npr und der Motor-Umrichter Mpr können beliebig aufgebaut sein, insbesondere kann es sich dabei um Schaltungen handeln, die eine Mehrzahl von Halbleiterbauelementen aufweisen, beispielsweise Dioden oder Transistoren oder dergleichen. Der Zwischenkreis Cd ist zur Speicherung einer Gleichspannung vorgesehen und weist insbesondere einen oder mehrere Kondensatoren auf.

Zur Messung des über den Netz-Umrichter Npr fließenden Stroms Inp ist auf der Netzseite des Netz-Umrichters Npr ein Stromsensor vorgesehen. Zur Messung des über den Motor-Umrichter Mpr fließenden Rotorstroms Ir ist auf der Maschinenseite des Motor-Umrichters Mpr ein weiterer Stromsensor vorhanden. Zwischen dem Motor-Umrichter Mpr und dem Zwischenkreis Cd ist ein Spannungssensor vorgesehen, mit dem die Zwischenkreisspannung Ud gemessen werden kann.

Die Messsignale der Netzspannung Un, der Statorspannung Us, der Zwischenkreisspannung Ud, des über den Netzumrichter Npr fließenden Stroms Inp, des Statorstroms Is und des Rotorstroms Ir sind einer Steuerung ST als Eingangssignale zugeführt. Diese Steuerung ST erzeugt mehrere Ausgangssignale ZES, ZNpr, ZMpr, mit denen der Statorschalter Es, der Netz-Umrichter Npr und der Motor-Umrichter Mpr angesteuert werden können.

Im Normalbetrieb dieser Schaltung ist der Statorschalter Es leitend geschaltet. Wird der Rotor durch eine äußere Kraft, beispielsweise durch Wind oder Wasser, in eine Drehbewegung versetzt, so wird im Stator eine Spannung induziert, die über den Statorschalter Es in das Energieversorgungsnetz eingespeist wird. Die Anpassung, insbesondere die Synchronisierung der in den Stator induzierten Spannung an die Netzspannung Un des Energieversorgungsnetzes wird von der Steuerung ST durch eine entsprechende Ansteuerung des Netz-Umrichters Npr und des Motor-Umrichters Mpr erreicht.

Tritt in dem Energieversorgungsnetz ein Fehler auf und wird dieser Fehler von der Steuerung ST erkannt, so wird der durch eine der elektrischen Schaltungen der Figuren 1 bis 3 realisierte Statorschalter Es von der Steuerung ST möglichst schnell sperrend geschaltet. Der Statorschalter Es ist dabei in der Lage, auch unter Last und insbesondere auch bei einem Fehler im Energieversorgungsnetz eine Umschaltung von seinem leitenden in den gesperrten Zustand durchzuführen. Die Umschaltung in den gesperrten Zustand wird dabei bei Erreichen einer vorgegebenen Zwischenkreisspannung Du oder bei Erreichen eines vorgegebenen Statorstroms Is oder bei Erreichen eines sonstigen vorgegebenen Schwellwerts durch die Steuerung ST ausgelöst.

Dies hat zur Folge, dass der Stator des Asynchrongenerators G von dem Transformator T und damit von dem Energieversorgungsnetz abgetrennt ist. Es fließt damit kein Statorstrom Is mehr. Eine weitergehende Aufladung des Zwischenkreises Cd über den Stator und den Rotor ist damit nicht mehr möglich. Die Bauelemente der beiden Umrichter Mpr, Npr sind damit nicht gefährdet und es ist auch nicht notwendig, den Betrieb der beiden Umrichter Mpr, Npr zu beenden.

Mit dem Erkennen eines Fehler in dem Energieversorgungsnetz wird der netzseitige Umrichter Npr derart von der Steuerung ST angesteuert, dass er einen Blindstrom in das Energieversorgungsnetz einspeist. Weiterhin werden die beiden Umrichter Mpr, Npr derart von der Steuerung ST angesteuert, dass ein erwünschter Wirkstrom erzeugt wird, der zur Aufrechterhaltung der Zwischenkreisspannung Ud erforderlich ist.

Nach der Unterbrechung des Statorstroms Is durch den Statorschalter Es wird der rotorseitige Stromrichter Mpr derart von der Steuerung ST angesteuert, dass der magnetische Fluss zu dem fehlerhaften Energieversorgungsnetz synchronisiert wird. Dabei überwacht die Steuerung die Netzspannung Un und die Statorspannung Us. Wird die Differenz dieser beiden Spannungen zu Null, was gleichbedeutend damit ist, dass die an dem Statorschalter Es anliegende Spannung zu Null wird, so wird der Statorschalter Es von der Steuerung ST wieder leitend geschaltet. Danach kann der Statorstrom Is von der Steuerung ST mit Hilfe des rotorseitigen Umrichters Mpr derart gesteuert werden, dass von dem Betreiber des Energieversorgungsnetzes vorgegebene Anforderungen für die Einspeisung von Energie im Fehlerfall erfüllt werden.

## Patentansprüche

1. Mehrphasige elektrische Schaltung zum Abschalten eines über jeweils einen Drehstromsteller geführten Stroms, wobei die Sternpunkte der an die Phasen angeschlossenen Spannungssysteme nicht über einen Nullleiter miteinander verbunden sind, und wobei der Drehstromsteller jeder Phase zwei Thyristoren (T11, T21, T12, T22, T13, T23) aufweist, **dadurch gekennzeichnet, dass** zu allen Phasen eine einzige Serienschaltung bestehend aus einem Kondensator (C) und einem der Phasenzahl entsprechenden Anzahl von parallelgeschalteten Löschschaltern (TL1, TL2, TL3) parallel geschaltet ist, und dass der Kondensator (C) über eine Diodenbrücke (DB) und einen Transformator (Tr) aufladbar ist.

2. Mehrphasige Schaltung nach Anspruch 1, wobei ein Schalter (S) auf der Primärseite oder auf der Sekundärseite des Transformators (Tr) vorhanden ist, mit dem die Kopplung zu den mindestens zwei der mehreren Phasen unterbrechbar ist.

3. Mehrphasige Schaltung nach Anspruch 1 oder 2, wobei ein Wechselstrom-Transformator oder ein Drehstrom-Transformator vorgesehen ist.

4. Mehrphasige Schaltung nach einem der Ansprüche 1 bis 3, wobei ein Vorschaltwiderstand (Rv) und gegebenenfalls eine Vorschaltspule (Lv) zwischen die Diodenbrücke (DB) und den Kondensator (C) geschaltet sind.

5. Mehrphasige elektrische Schaltung zum Abschalten eines über jeweils einen Drehstromsteller geführten Stroms, wobei die Sternpunkte der an die Phasen angeschlossenen Spannungssysteme nicht über einen Nullleiter miteinander verbunden sind, und wobei der Drehstromsteller jeder Phase zwei Thyristoren (T11, T21, T12, T22, T13, T23) aufweist, **dadurch gekennzeichnet, dass** zu allen Phasen eine einzige Serienschaltung bestehend aus einem Kondensator (C) und einem der Phasenzahl entsprechenden Anzahl von parallelgeschalteten Löschschaltern (TL1, TL2, TL3) parallel geschaltet ist, und dass eine Steuerung (ST) derart ausgebildet ist, dass einer der Löschschalter (TL1) und ein gleichsinnig geschalteter Thyristor (T11) einer der Phasen gleichzeitig leitend schaltbar sind.

6. Mehrphasige Schaltung nach Anspruch 5, wobei die Steuerung (ST) derart ausgebildet ist, dass der Löschschalter (TL1) und der gleichsinnig geschaltete Thyristor (T11) nur dann leitend schaltbar sind, wenn die zu dem Thyristor (T11) zugehörige Netzspannung (Un1) positiv ist.

7. Mehrphasige Schaltung nach Anspruch 5 oder 6, wobei die Steuerung (ST) derart ausgebildet ist, dass der Löschschalter (TL1) und der gleichsinnig geschaltete Thyristor (T11) mehrfach in aufeinanderfolgenden Netzperioden leitend schaltbar sind.

8. Mehrphasige Schaltung nach einem der vorstehenden Ansprüche, wobei der Wechselstrom- oder Drehstromsteller zwischen zwei elektrische Netze (Un, Uq) oder zwischen ein elektrisches Netz und eines Last geschaltet ist.

9. Mehrphasige Schaltung nach Anspruch 8, wobei als elektrisches Netz ein Energieversorgungsnetz und als Last ein Generator insbesondere einer Windkraft-Energieerzeugungsanlage vorgesehen ist.

10. Verfahren zum Abschalten eines über einen Thyristor eines Drehstromstellers geführten Stroms, **dadurch gekennzeichnet, dass** ein parallel zu dem Thyristor geschalteter Löschschalter leitend geschaltet wird, dass von einem in Serie zu dem Löschschalter geschalteten Kondensator ein Strom über den Löschschalter getrieben wird, der dem über den Thyristor geführten Strom entgegenwirkt, und dass der Kondensator über eine Diodenbrücke und einen Transformator aufgeladen wird.

11. Verfahren zum Abschalten eines über einen Thyristor eines Drehstromstellers geführten Stroms, **dadurch gekennzeichnet, dass** ein parallel zu dem Thyristor geschalteter Löschschalter leitend geschaltet wird, dass von einem in Serie zu dem Löschschalter geschalteten Kondensator ein Strom über den Löschschalter getrieben wird, der dem über den Thyristor geführten Strom entgegenwirkt, und dass zum Aufladen des Kondensators der Löschschalter und ein gleichsinnig geschalteter Thyristor des Drehstromstellers gleichzeitig leitend geschaltet werden.

12. Verfahren nach einem der Ansprüche 10 oder 11, wobei ein Asynchrongenerator statorseitig über den Thyristor mit einem Energieversorgungsnetz gekoppelt ist, wobei der Asynchrongenerator rotorseitig über einen rotorseitigen Umrichter, einen Zwischenkreis und einen netzseitigen Umrichter mit dem Energieversorgungsnetz verbunden ist, und wobei bei einem Fehler in dem Energieversorgungsnetz die Kopplung zwischen dem Stator des Asynchrongenerators und dem Energieversorgungsnetz möglichst schnell unterbrochen wird.
